# FASCICULE DE BREVET EUROPEEN

(11) **EP 3 307 622 B1**
(45) Date de publication et mention de la délivrance du brevet: **31.07.2019**
(21) Numéro de dépôt: 16728712.7
(22) Date de dépôt: 14.06.2016
(51) Int. Cl.: B64D 11/06, B60N 2/30, F16D 51/10

(54) **SIEGE D'AERONEF MUNI D'UN SYSTEME MECANIQUE DE REDUCTION DE VITESSE D'ASSISE**
FLUGZEUGKLAPPSITZ MIT MECHANISCHER VORRICHTUNG ZUR DÄMPFUNG DER KLAPPBEWEGUNG
AIRCRAFT FOLDING SEAT WITH MECHANICAL SYSTEM FOR DAMPER THE SEAT RETRACTION

(30) Priorité: 15.06.2015 FR 1555451
(43) Date de publication de la demande: 18.04.2018
(73) Titulaire: Zodiac Seats France, 36100 Issoudun (FR)
(72) Inventeur: MESAROS, Alexandre, 36100 Issoudun (FR); LEBEGUE, Brice, 36100 Issoudun (FR); LAVAL, Jordi, 36100 Issoudun (FR)
(74) Mandataire: Marconnet, Sébastien
(86) Numéro de dépôt international: PCT/EP2016/063574
(87) Numéro de publication internationale: WO 2016/202772

(56) Documents cités:
- DE-A1- 2 931 237
- DE-A1-102010 050 169
- US-A- 3 594 037

## Description

La présente invention porte sur un siège d'aéronef muni d'un système mécanique de réduction de vitesse d'assise. L'invention trouve une application particulièrement avantageuse, mais non exclusive, avec les sièges d'avion utilisés par le personnel de bord. L'état de l'art est illustré par les documents US-A1-3594037 et DE-A1-2931237.

De façon connue en soi, de tels sièges comportent une assise montée mobile en rotation par rapport au dossier entre une position déployée dans laquelle l'assise est écartée par rapport au dossier et une position repliée dans laquelle l'assise est rabattue contre le dossier.

Pour des raisons de sécurité, l'assise est configurée pour revenir de façon automatique en position repliée au moyen d'un système de rappel. Ce mouvement de retour automatique de l'assise doit être limité en vitesse pour éviter un éventuel pincement de doigts ou des nuisances sonores.

Afin d'assurer un retour contrôlé en vitesse de l'assise du siège en position relevée, il est connu d'utiliser des vérins à gaz ou hydrauliques qui présentent l'inconvénient d'être couteux et lourds. De tels dispositifs peuvent également avoir des problèmes de fiabilité en endurance.

L'invention vise à remédier efficacement à ces inconvénients en proposant un siège destiné à être installé dans un aéronef comportant:
- un dossier,
- une assise montée mobile en rotation autour d'un axe par rapport audit dossier entre une position déployée et une position repliée,
- un système de rappel apte à faire passer l'assise de façon automatique de la position déployée à la position repliée,
- un système mécanique de réduction de vitesse de l'assise comportant
   - une plaque en forme de came, et
   - un galet apte à se déplacer suivant un bord de ladite plaque en forme de came lors d'un déplacement de ladite assise de ladite position déployée à ladite position repliée généré par ledit système de rappel,
   - au moins un des deux éléments, parmi ledit galet et ladite plaque en forme de came, étant apte à se compresser lors du déplacement du galet de manière à absorber une énergie cinétique de ladite assise pour réduire sa vitesse de déplacement.

L'invention intègre ainsi un système de réduction de vitesse d'assise économique et fiable, dans la mesure où il comporte un nombre limité de pièces mécaniques sans utilisation de fluide. Un tel système est en outre aisé à remplacer dans le cadre d'opérations de maintenance. Le système est également beaucoup plus léger qu'un vérin à gaz pour une performance au moins similaire. En effet, sa masse totale est de l'ordre de 25 grammes, ce qui est au minimum cinq fois plus léger qu'un dispositif basé sur l'utilisation d'un vérin à gaz.

Selon une réalisation, ledit galet est configuré pour se compresser lors de son déplacement le long du bord de ladite plaque en forme de came.

Selon une réalisation, ladite plaque en forme de came est réalisée dans un matériau plus rigide que le matériau constituant ledit galet.

Selon une réalisation, une surface dudit bord de ladite plaque en forme de came est moletée. Cela permet de minimiser le glissement du galet sur le bord interne de la plaque et obliger la pièce à rouler.

Selon une réalisation, ladite plaque en forme de came est configurée pour se compresser lors du déplacement dudit galet le long dudit bord de ladite plaque en forme de came.

Selon une réalisation, ledit galet est réalisé dans un matériau plus rigide que le matériau constituant ladite plaque en forme de came.

Selon une réalisation, une périphérie externe dudit galet est moletée.

Selon une réalisation, ledit système de rappel comporte un ressort de torsion monté autour dudit axe et/ou une ou plusieurs lames ressorts montées entre ladite assise et ledit dossier.

Selon une réalisation, ledit galet est monté rotatif autour d'un axe par rapport à ladite assise.

Selon une réalisation, ladite plaque en forme de came est intégrée ou rapportée par rapport à une structure dudit siège.

Selon une réalisation, ledit système mécanique de réduction de vitesse d'assise est installé de chaque côté de ladite assise. Cela permet d'éviter que les jeux radiaux dans les axes de l'assise puissent se compenser.

Bien entendu, les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
- La figure 1 est une représentation schématique des différents états de l'assise d'un siège selon la présente invention passant d'une position déployée à une position repliée;
- Les figures 2a à 2c sont des vues de côté du système mécanique de réduction de vitesse de l'assise selon la présente invention montrant l'évolution du déplacement du galet lorsque le siège passe d'une position déployée à une position repliée;
- Les figures 3a et 3b sont des représentations graphiques de la vitesse de déplacement de l'assise lors de son retour en position repliée en fonction de différents profils de la plaque en forme de came.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

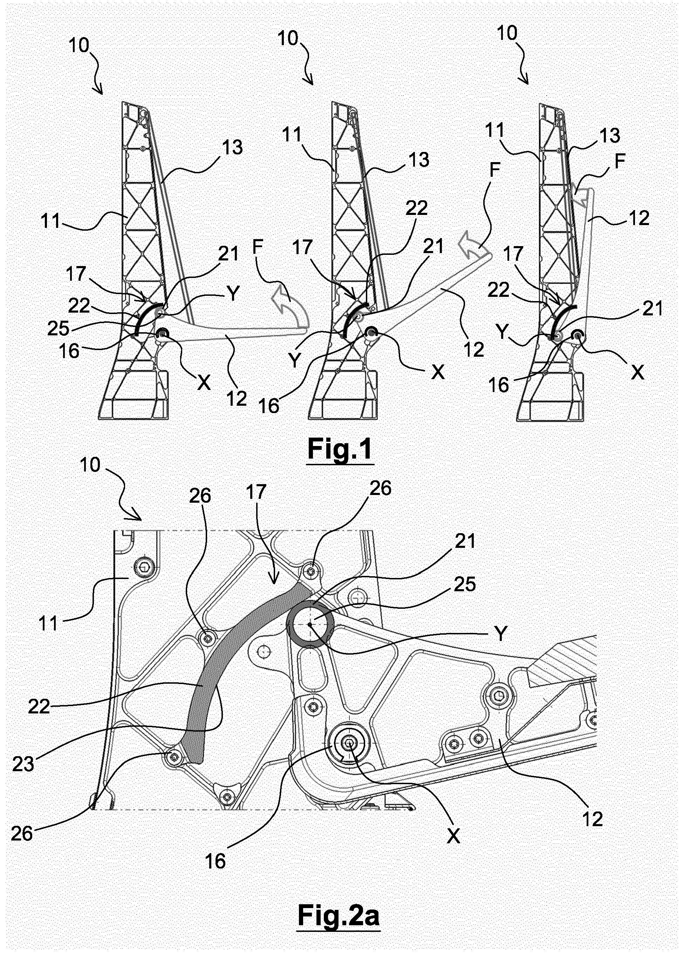

La figure 1 montre un siège 10 comportant une structure de siège 11 sur laquelle est installée une assise 12. Cette assise 12 est montée mobile en rotation autour d'un axe X par rapport à un dossier 13 entre une position déployée dans laquelle l'assise 12 est écartée par rapport au dossier 13 et une position repliée dans laquelle l'assise 12 est rabattue contre le dossier 13. Le passage de la position déployée à la position repliée est effectué de façon automatique, suivant la flèche F, au moyen d'un système de rappel 16.

Ce système de rappel 16 pourra par exemple comporter un ressort de torsion monté autour de l'axe X. Alternativement, le système de rappel 16 peut comporter une ou plusieurs lames ressorts montées entre l'assise 12 et le dossier 13. Le système de rappel 16 pourra en variante comporter un système à vérin.

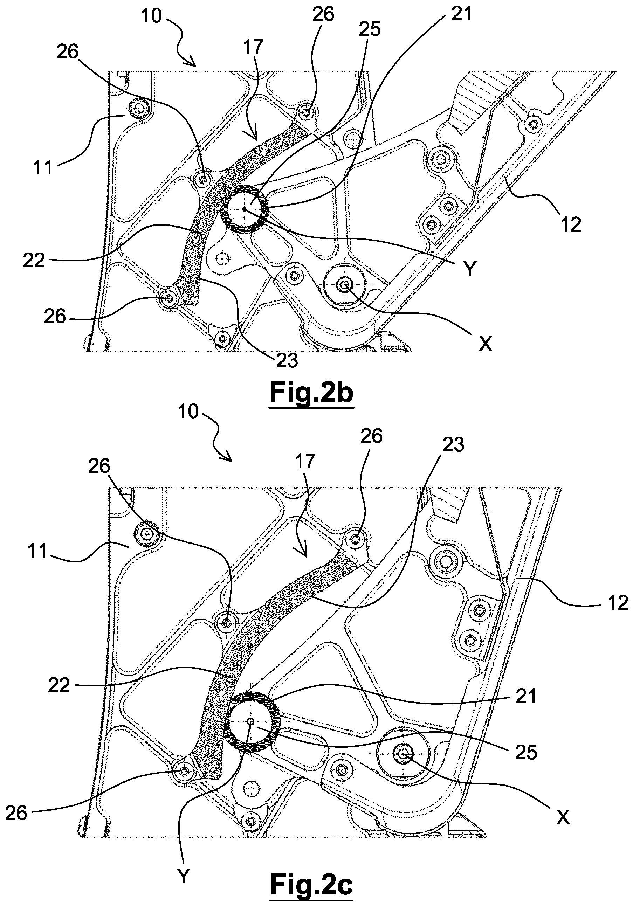

Comme cela est visible sur les figures 2a à 2c, un système mécanique 17 de réduction de vitesse de l'assise 12 comporte un galet 21 apte à se déplacer suivant un bord interne 23 d'une plaque 22 en forme de came lors d'un déplacement de l'assise 12 de la position déployée à la position repliée généré par le système de rappel 16. Au moins un des deux éléments, parmi le galet 21 et la plaque 22, est apte à se compresser lors du déplacement du galet 21 de manière à absorber une énergie cinétique de l'assise 12 pour réduire sa vitesse de déplacement lors de son retour en position repliée.

A cet effet, le galet 21 est monté rotatif par rapport à l'assise 12 autour d'un axe Y situé du côté du bord arrière de l'assise 12. L'axe Y est mobile en rotation autour de l'axe X lors du retour de l'assise 12 en position repliée. Le galet 21 de forme annulaire pourra par exemple être monté autour une pièce cylindrique 25 en forme d'arbre insérée, par exemple par emmanchement à force, à l'intérieur d'une cavité de forme correspondante ménagée dans la structure de siège 11.

Par ailleurs, la plaque 22 pourra être intégrée ou rapportée par rapport à la structure du siège 10. Dans le cas où la plaque 22 est intégrée par rapport à la structure de siège 11, la plaque 22 pourra être monobloc avec un autre élément de la structure de siège 11. Dans le cas où la plaque 22 est rapportée par rapport à la structure de siège 11, la plaque 22 est fixée sur la structure du siège au moyen d'organes de fixation 26.

Ces organes de fixation 26 positionnés aux extrémités de la plaque 22 et dans sa partie centrale pourront par exemple prendre la forme de vis ou de rivets insérés chacun dans une ouverture réalisée dans une oreille saillante issue d'un bord externe de la plaque 22 afin de coopérer dans des alésages taraudés correspondants de la structure de siège 11. Tout autre système de fixation adapté à l'application serait toutefois envisageable.

Suivant un première mode de réalisation, le galet 21 est configuré pour se compresser lors de son déplacement le long du bord interne 23 de la plaque 22. Dans ce cas, la plaque 22 est réalisée dans un matériau plus rigide que le matériau constituant le galet 21. Par matériau plus rigide, on entend un matériau plus résistant à la déformation que celui constituant le galet 21.

On décrit ci-après en référence aux figures 2a à 2c, le fonctionnement du système mécanique 17 de réduction de vitesse d'assise 12 lorsque l'assise 12 passe de la position déployée à la position repliée du fait de l'action du système de rappel 16.

Lors de la rotation de l'assise 12 autour de l'axe X, le galet 21 tourne autour de l'axe Y le long du bord interne 23 de la plaque 22, et en même temps, le bord interne 23 de la plaque 22 compresse par réaction la périphérie interne du galet 21. Cela a pour effet d'absorber une partie de l'énergie cinétique de l'assise 12 et donc de ralentir son déplacement en rotation.

Afin de minimiser le glissement du galet 21 sur le bord interne 23 de la plaque 22 et obliger le galet 21 à rouler, la surface du bord 23 de la plaque 22 destinée à être en contact avec le galet 21 pourra être moletée.

Dans un deuxième mode de réalisation, on prévoit que la plaque 22 se compresse lors du déplacement du galet 21 le long de son bord 23 en forme de came. Dans ce cas, le galet 21 est réalisé dans un matériau plus rigide que le matériau constituant la plaque 22. La périphérie externe du galet 21 pourra être moletée afin de minimiser le glissement entre les deux pièces.

Le système de réduction de vitesse d'assise 12 est de préférence installé de chaque côté de l'assise 12 pour éviter que les jeux radiaux dans les axes d'assise 12 puissent se compenser.

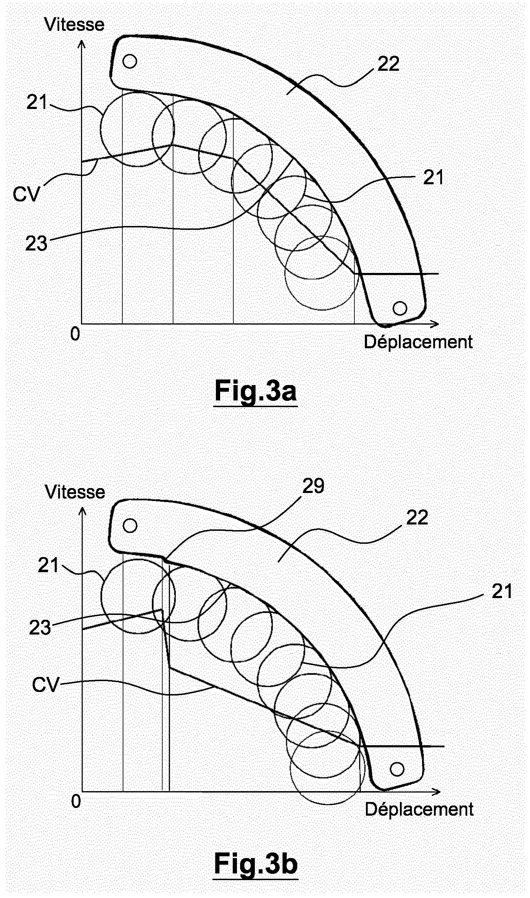

Comme cela est illustré en figure 3a et 3b, la courbe de vitesse CV de déplacement de l'assise 12 peut être paramétrée en modifiant le profil du bord interne 23 de la plaque 22. Ainsi, en augmentant la courbure interne de la came, il sera possible d'augmenter la vitesse de déplacement de l'assise 12 lors du retour en position repliée, tel que montré en figure 3a.

Inversement, en réduisant la courbure interne de la plaque 22, il sera possible de réduire la vitesse de déplacement de l'assise 12 lors du retour en position repliée, tel que montré en figure 3b. La réduction de la courbure interne de la plaque 22 pourra être obtenue par la réalisation d'un décrochement 29 dans le bord interne 23 de la plaque 22.

Le système de fixation de la plaque 22 pourra intégrer, le cas échéant, un système de réglage du profil interne. En variante, on peut aussi contrôler la vitesse de déplacement de l'assise 12 en adaptant le type de matériau utilisé pour réaliser le galet 21 et/ou la plaque 22 notamment son bord interne 23.

L'invention intègre ainsi un système mécanique 17 de réduction de vitesse d'assise économique et fiable, dans la mesure où il comporte un nombre limité de pièces sans utilisation de fluide. Un tel système est en outre aisé à remplacer dans le cadre d'opérations de maintenance. Le système est également beaucoup plus léger qu'un vérin à gaz pour une performance au moins similaire. En effet, sa masse totale est de l'ordre de 25 grammes, ce qui est au minimum cinq fois plus léger qu'un dispositif basé sur l'utilisation d'un vérin à gaz.

Bien évidemment, l'invention n'est pas limitée aux modes de réalisation décrits précédemment et fournis uniquement à titre d'exemple. Elle englobe diverses modifications, formes alternatives et autres variantes, pourvu qu'elles soient couvertes par le texte des revendications.

## Revendications

1. Siège (10) destiné à être installé dans un aéronef comportant:
- un dossier (13),
- une assise (12) montée mobile en rotation autour d'un axe (X) par rapport audit dossier (13) entre une position déployée et une position repliée,
- un système de rappel (16) apte à faire passer l'assise (12) de façon automatique de la position déployée à la position repliée,
- un système mécanique (17) de réduction de vitesse de l'assise (12) comportant
- une plaque (22) en forme de came, et
- un galet (21) apte à se déplacer suivant un bord (23) de ladite plaque (22) en forme de came lors d'un déplacement de ladite assise (12) de ladite position déployée à ladite position repliée généré par ledit système de rappel (16),
- au moins un des deux éléments, parmi ledit galet (21) et ladite plaque (22) en forme de came, étant apte à se compresser lors du déplacement du galet (21) de manière à absorber une énergie cinétique de ladite assise (12) pour réduire sa vitesse de déplacement.

2. Siège (10) selon la revendication 1, **caractérisé en ce que** ledit galet (21) est configuré pour se compresser lors de son déplacement le long du bord (23) de ladite plaque (22) en forme de came.

3. Siège (10) selon la revendication 2, **caractérisé en ce que** ladite plaque (22) en forme de came est réalisée dans un matériau plus rigide que le matériau constituant ledit galet (21).

4. Siège (10) selon la revendication 2 ou 3, **caractérisé en ce qu'**une surface dudit bord (23) de ladite plaque (22) en forme de came est moletée.

5. Siège (10) selon la revendication 1, **caractérisé en ce que** ladite plaque (22) en forme de came est configurée pour se compresser lors du déplacement dudit galet (21) le long dudit bord (23) de ladite plaque (22) en forme de came.

6. Siège (10) selon la revendication 5, **caractérisé en ce que** ledit galet (21) est réalisé dans un matériau plus rigide que le matériau constituant ladite plaque (22) en forme de came.

7. Siège (10) selon la revendication 5 ou 6, **caractérisé en ce qu'**une périphérie externe dudit galet (21) est moletée.

8. Siège (10) selon l'une quelconque des revendications 1 à 7, **caractérisé en ce que** ledit système de rappel (16) comporte un ressort de torsion monté autour dudit axe (X) et/ou une ou plusieurs lames ressorts montées entre ladite assise (12) et ledit dossier (13).

9. Siège (10) selon l'une quelconque des revendications 1 à 8, **caractérisé en ce que** ledit galet (21) est monté rotatif autour d'un axe (Y) par rapport à ladite assise (12).

10. Siège (10) selon l'une quelconque des revendications 1 à 9, **caractérisé en ce que** ladite plaque (22) en forme de came est intégrée ou rapportée par rapport à une structure dudit siège (11).

11. Siège (10) selon l'une quelconque des revendications 1 à 10, **caractérisé en ce que** ledit système mécanique (17) de réduction de vitesse d'assise (12) est installé de chaque côté de ladite assise (12).

## Patentansprüche

1. Sitz (10) zum Einbau in ein Flugzeug, mit:
- einer Rückenlehne (13),
- einem Sitzabschnitt (12), der drehbar um eine Achse (X) in Bezug auf die Rückenlehne (13) zwischen einer ausgefahrenen Stellung und einer eingeklappten Stellung angebracht ist,
- einem Rückstellsystem (16), das den Sitzabschnitt (12) automatisch von der ausgefahrenen Stellung in die eingeklappte Stellung bewegen kann,
- einer mechanisches Geschwindigkeitsreduzierungssystem (17) für den Sitzabschnitt (12) mit
- einer nockenförmigen Platte (22) und
- einer Rolle (21), die sich entlang einer Kante (23) der nockenförmigen Platte (22) beim der durch das Rückstellsystem (16) erzeugten Verstellung des Sitzabschnitts (12) von der ausgefahrenen Stellung in die eingeklappte Stellung bewegen kann,
- wobei mindestens eines der beiden Elemente aus der Rolle (21) und der nockenförmigen Platte (22) bei der Verstellung der Rolle (21) zusammengedrückt werden kann, um eine kinetische Energie des Sitzabschnitts (12) zum Verringern dessen Verstellgeschwindigkeit zu absorbieren.

2. Sitz (10) nach Anspruch 1, **dadurch gekennzeichnet, dass** die Rolle (21) so konfiguriert ist, dass sie sich bei ihrer Verstellung entlang der Kante (23) der nockenförmigen Platte (22) komprimiert.

3. Sitz (10) nach Anspruch 2, **dadurch gekennzeichnet, dass** die nockenförmige Platte (22) aus einem steiferen als das Material der Rolle (21) Material hergestellt ist.

4. Sitz (10) nach Anspruch 2 oder 3, **dadurch gekennzeichnet, dass** eine Fläche der Kante (23) der nockenförmigen Platte (22) gerändelt ist.

5. Sitz (10) nach Anspruch 1, **dadurch gekennzeichnet, dass** die nockenförmige Platte (22) so konfiguriert ist, dass sie sich bei der Verstellung der Rolle (21) entlang der Kante (23) der nockenförmigen Platte (22) komprimiert.

6. Sitz (10) nach Anspruch 5, **dadurch gekennzeichnet, dass** die Rolle (21) aus einem steiferen Material als das Material der nockenförmigen Platte (22) hergestellt ist.

7. Sitz (10) nach Anspruch 5 oder 6, **dadurch gekennzeichnet, dass** ein Außenumfang der Rolle (21) gerändelt ist.

8. Sitz (10) nach einem der Ansprüche 1 bis 7, **dadurch gekennzeichnet, dass** das Rückstellsystem (16) eine um die Achse (X) montierte Torsionsfeder und/oder eine oder mehrere zwischen dem Sitzabschnitt (12) und der Rückenlehne (13) montierten Blattfedern umfasst.

9. Sitz (10) nach einem der Ansprüche 1 bis 8, **dadurch gekennzeichnet, dass** die Rolle (21) relativ zu dem Sitzabschnitt (12) um eine Achse (Y) drehbar gelagert ist.

10. Sitz (10) nach einem der Ansprüche 1 bis 9, **dadurch gekennzeichnet, dass** die nockenförmige Platte (22) in oder an einer Sitzstruktur (11) integriert bzw. angebaut ist.

11. Sitz (10) nach einem der Ansprüche 1 bis 10, **dadurch gekennzeichnet, dass** das mechanische Geschwindigkeitsreduzierungssystem (17) für den Sitzabschnitt (12) auf jeder Seite des Sitzabschnitts (12) installiert ist.

## Claims

1. A seat (10) to be installed in an aircraft comprising:
- a backrest (13),
- a seating portion (12) rotatably mounted about an axis (X) with respect to said backrest (13) between an extended position and a folded position,
- a return system (16) adapted to move the seating portion (12) automatically from the extended position to the folded position,
- a mechanical speed reduction system (17) for the seating portion (12) comprising
- a cam-shaped plate (22), and
- a roller (21) adapted to move along an edge (23) of said cam-shaped plate (22) upon displacement of said seating portion (12), generated by said return system (16), from said extended position to said folded position,
- at least one of the two elements, among said roller (21) and said cam-shaped plate (22), being able to compress upon displacement of the roller (21) so as to absorb a kinetic energy of said seating portion (12) in order to reduce the displacement speed thereof.

2. The seat (10) according to claim 1, **characterized in that** said roller (21) is configured to compress upon displacement thereof along the edge (23) of said cam-shaped plate (22).

3. The seat (10) according to claim 2, **characterized in that** said cam-shaped plate (22) is made of a more rigid material than the material of said roller (21).

4. The seat (10) according to claim 2 or 3, **characterized in that** a surface of said edge (23) of said cam-shaped plate (22) is knurled.

5. The seat (10) according to claim 1, **characterized in that** said cam-shaped plate (22) is configured to compress upon displacement of said roller (21) along said edge (23) of said cam-shaped plate (22).

6. The seat (10) according to claim 5, **characterized in that** said roller (21) is made of a more rigid material than the material of said cam-shaped plate (22).

7. The seat (10) according to claim 5 or 6, **characterized in that** an outer periphery of said roller (21) is knurled.

8. The seat (10) according to any one of claims 1 to 7, **characterized in that** said return system (16) comprises a torsion spring mounted around said axis (X) and/or one or more leaf springs mounted between said seating portion (12) and said backrest (13).

9. The seat (10) according to any one of claims 1 to 8, **characterized in that** said roller (21) is rotatably mounted about an axis (Y) relative to said seating portion (12).

10. The seat (10) according to any one of claims 1 to 9, **characterized in that** said cam-shaped plate (22) is integrated in or attached to a seat structure (11).

11. The seat (10) according to any one of claims 1 to 10, **characterized in that** said mechanical speed reduction system (17) for the seating portion (12) is installed on each side of said seating portion (12).
